Europäisches Patentamt

European Patent Office

Office européen des brevets

(11) Publication number: **0 271 221**
A1

## (12) EUROPEAN PATENT APPLICATION

(21) Application number: 87309954.3

(22) Date of filing: 11.11.87

(51) Int. Cl.⁴: **A23P 1/00** , A23L 3/36 , A23B 4/06 , A22C 25/18

(30) Priority: 12.11.86 GB 8626986

(43) Date of publication of application:
15.06.88 Bulletin 88/24

(84) Designated Contracting States:
DE GB SE

(71) Applicant: KLIKLOK CORPORATION
5224 Snapfinger Woods Drive
Decatur Georgia 30035(US)

(72) Inventor: Pike, Brian Charles
2 Bramley Close Locking
Weston Super Mare Avon(GB)

(74) Representative: Hulse, Thomas Arnold et al
Hulse & Co. Cavendish Buildings West
Street
Sheffield S1 1ZZ(GB)

(54) Product handling mechanism.

(57) In a mechanism for turning food sticks (10), e.g., fish fingers, from an on-edge disposition (a) to a flat disposition (f), of the type having divider blocks (11) spaced apart by lifters (12) with offset peaks (14), the divider blocks (11) are provided with biassing air jets (38) and preferably also counter air jets (45), which can blow continuously, to initiate rapid turning of the food sticks (10) regardless of their inertia and irregularities of cross-section, thereby enabling the mechanism to operate more rapidly without damaging the food sticks.

*Fig. 5*

## PRODUCT HANDLING MECHANSM

This invention relates to a product handling mechanism, more particularly a mechanism for turning fish fingers or like slab-like stick food products, hereinafter refered to as "food sticks" from an on-edge disposition to a flat disposition.

Such mechanism is known in which a plurality of upright divider blocks are spaced apart by lifters, which are adapted to receive food sticks on-edge from a feed conveyor, the lifters being provided with laterally offset longitudinally extending peaks for contact with the food sticks offset from the centre-planes of the food sticks, whereby upon lifting of the food sticks by the lifters the food sticks tend to turn in one and the same direction towards the flat disposition, and the face of each divider block towards which the respective food stick tends to turn has an upper portion inclined away upwardly to assist in turning the food stick into the flat disposition as the peak of the respective lifter approaches the same level as the top of the divider block. Obviously, there will be one more divider block than lifters, which divider block will not need to have any face portion inclined away upwardly because the adjacent lifter will tend to turn a food stick towards the next divider block.

Because of the moment of inertia of the food sticks and irregularities of their cross-section, including possible slight but appreciable flanges along one or more edges, the speed of operation of the lifters must be slow enough to ensure that the food sticks on all the lifters are fully turned into the flat disposition on top of the divider blocks before operation of a pusher which is reciprocable along the length of the divider blocks to move the food sticks further in the feed direction in flat disposition. Obviously, sensors are provided one adjacent the trailing end of each lifter, to detect the presence of a food stick on the lifter, the pusher only being operated when all the sensors have detected the presence of food sticks.

Attempts to speed up operation of the lifters in the known mechanism usually result in failure of the food sticks to turn and bouncing of the food sticks on the lifters. Any attempt to provide mechanical assistance results in damage to the food sticks through rough handling, and there is also the danger of food sticks jamming due to the infinite range of irregularities in their profiles.

The object of the present invention is to provide improved mechanism for turning food sticks from on-edge disposition to flat disposition.

According to the present invention, in a mechanism of the known type, the face of each divider block opposite the portion of the face of the adjacent block that is inclined away upwardly is provided with at least one biassing air jet, and all the biassing air jets are connected to pressure air control means, whereby, as lifting of the food sticks commences, blasts of air from the biassing air jets initiate rapid turning of the food sticks by impinging on the adjacent faces of the food sticks adjacent their edges remote from the lifters.

The remarkable advantages of the biassing air jets are that they do not intrude upon the space occupied by the food sticks and their effectiveness is not affected by any irregulariites whatsoever in the food sticks.

Preferably, at least two biassing air jets are provided within the length of each divider block, so that a pair of air blasts will impinge on each food stick at spaced positions along its length.

Advantageously, at least one counter air jet (and preferably two) is provided in the face of each divider block below the portion that is inclined away upwardly, and all the counter air jets are connected to pressure air control means, whereby, as food sticks arrive on the lifters, blasts of air from the counter air jets urge each food stick over to contact the next divider block, for correct positioning on the peak of the respective lifter. One pressure air control means may serve for both the biassing air jets and the counter air jets, which may be operated in sequence, or they may be supplied with pressure air continuously, in view of the high speed of operation of the turning mechanism achieved by the invention and the cyclical closing of the air jets by the raised lifters.

Each lifter preferably is adapted to be lifted until their peaks extend above the tops of the divider blocks, whereby the peaks can form guides for food sticks in flat disposition supported on the tops of the divider blocks, and preferably adjacent body portions of the lifters, the pusher being provided with notches in its underside to pass along the peaks as the pusher is operated to move the food sticks further in the feed direction in flat disposition. However, the divider blocks may be provided with facing plates, with holes for the biassing air jets, and may have upward extensions first inclined away from the divider blocks to afford assistance in the turning of the food sticks as they approach the flat disposition, then extending vertically to form guides for food sticks in flat disposition.

An embodiment of the invention and a modification thereof will now be described, by way of example only, with reference to the accompanying drawings, in which:-

Figure 1 is a fragmentary vertical section of product handling mechanism in accordance with the invention, the section being generally aligned with the line I-I in Figure 2;

Figure 2 is a fragmentary elevation taken from the line II-II of Figure 1 and showing food sticks in an on-edge disposition;

Figure 3 correponds to Figure 2 but shows the mechanism after it has brought the food sticks to a flat disposition;

Figure 4 corresponds to part of Figure 1 to a larger scale showing the detail of the divider blocks and lifters in accordance with the invention;

Figure 5 illustrates diagrammatically the progression between Figures 2 and 3 with operation of the inventive features; and

Figure 6 corresponds to part of Figure 5 with a modification.

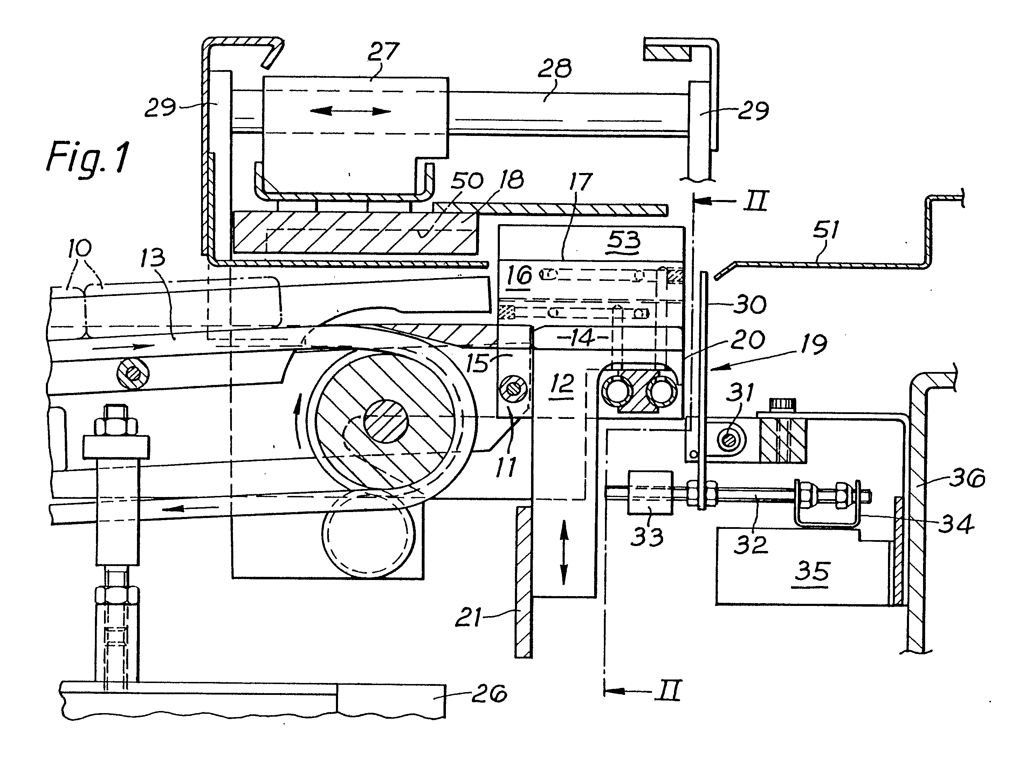

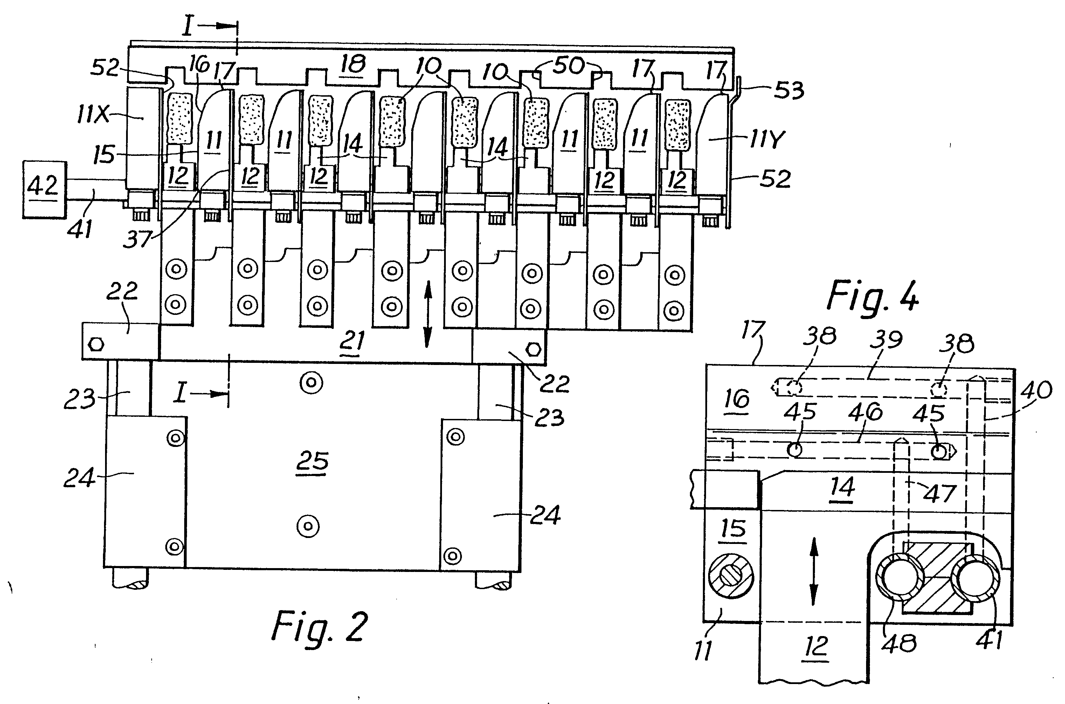

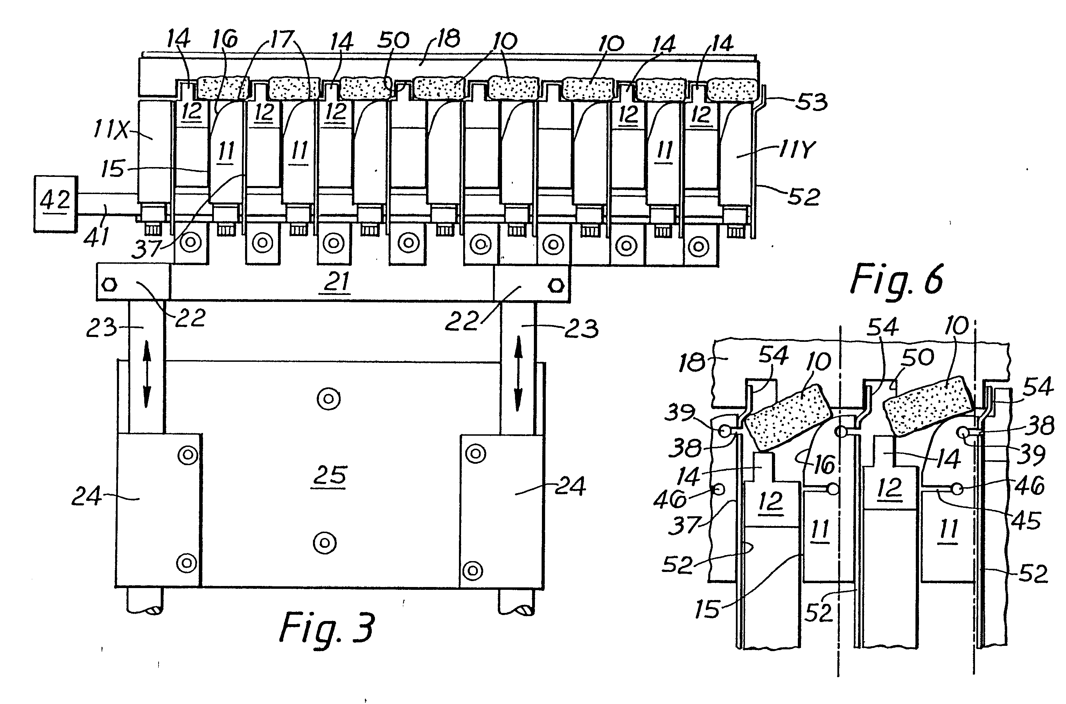

The product handling mechanism illustrated in part in Figures 1 to 4 is for turning fish fingers or like slab-like food products, or food sticks 10, from an on-edge disposition (Figure 2) to a flat disposition (Figure 3), and is basically a known mechanism in which a plurality of upright divider blocks 11 are spaced apart by lifters 12, which receive the food sticks 10 on-edge from a feed conveyor 13, the lifters being provided with laterally offset longitudinally extending peaks 14 for contact with the food sticks offset from the centre-planes of the food sticks, whereby upon lifting of the food sticks by the lifters (from the position shown in Figure 2) the food sticks tend to turn in one and the same direction towards the flat disposition (which is finally achieved in Figure 3), and the face 15 of each divider block 11 towards which the respective food stick 10 tends to turn has an upper portion 16 inclined away upwardly to assist in turning the food stick into the flat disposition as the peak 14 of the respective lifter approaches the same level as the top 17 of the divider block. Obviously, there will be one more divider block than lifters, which divider block 11X will not need to have any face portion inclined away upwardly because the adjacent lifter will tend to turn a food stick towards the next divider block.

Because of the moment of inertia of the food sticks 10 and irregularities of their cross-section, including possible slight but appreciable flanges (not shown) along one or more edges, the speed of operation of the lifters in the known mechanism must be slow enough to ensure that the food sticks on all the lifters are fully turned into the flat disposition on top of the divider blocks before operation of a pusher 18 which is reciprocable along the length of the divider blocks to move the food sticks further in the feed direction in flat disposition. Obviously, sensors 19 (only one shown in Figure 1) are provided one adjacent the trailing end 20 of each lifter 12, to detect the presence of a food stick 10 on the lifter, the pusher 18 only being operated when all the sensors have detected the presence of food sticks.

The lifters 12 are bolted to a plate 21 having clamps 22 securing it to guide rods 23 reciprocable (by means not shown) in blocks 24 on a plate 25 adapted to be secured to a part 26 (Figure 1) of a frame. The pusher 18 is suspended from blocks 27 (only one shown in Figure 1) reciprocable (by means not shown) on guide bars 28 extending between frame members 29. Each sensor 19 comprises a finger 30 projecting upwards from a pivot 31 and also extending downwards to a screw-threaded rod 32 carrying an axially adjustable counterbalance weight 33 for an axially adjustable saddle 34, which actuates a proximity switch 35 when the finger 30 is pushed by a food stick 10 pushed on to the respective lifter 12 all the sensors being carried by a frame part 36, and all the proximity switches being connected in series with actuating means (not shown) for the pusher.

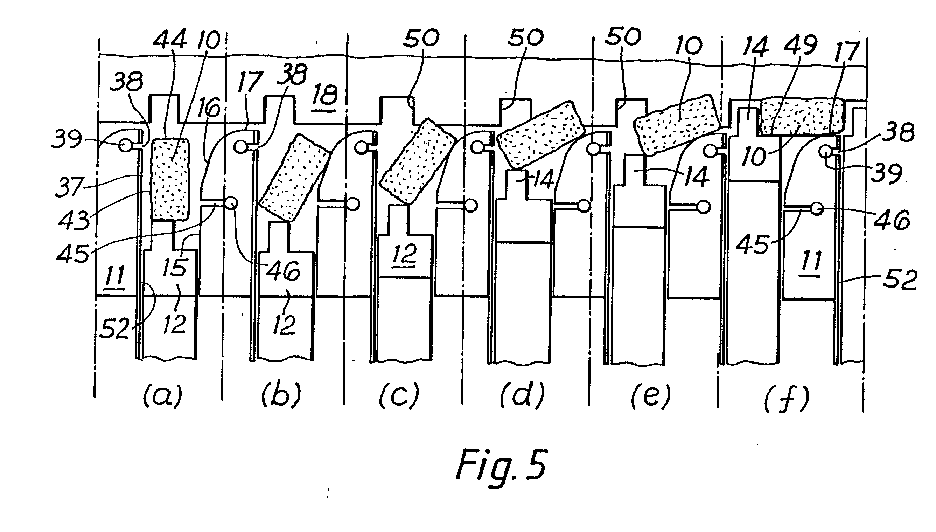

In accordance with the invention, and as particularly shown in Figures 1 and 4, the face 37 of each divider block 11 opposite the inclined portion 16 of the face 15 of the adjacent divider block is provided with two biassing air jets 38 and all the biassing air jets connected via holes 39, 40 in the blocks and a manifold 41 (see also Figures 2 and 3) to pressure air control means 42, whereby, as lifting of the food sticks 10 commences, blasts of air from the biassing air jets 38 initiate rapid turning of the foods sticks by impinging on the adjacent faces 43 (see Figure 5) of the food sticks adjacent their edges 44 remote from the lifters.

Two counter air jets 45 are provided in the face 15 of each divider block 11 below the portion 16 inclined away upwardly, and all the counter air jets are connected via holes 46, 47 in the blocks and a manifold 48 to the pressure air control means, whereby, blasts of air from the counter air jets 45 urge each food stick 10 over to contact the next divider block, for correct positioning on the peak 14 of the respective lifter.

Although the pressure air control means 42 may be such that the biassing air jets 38 and the counter air jets 45 are operated in sequence, it is convenient for pressure air to be supplied continuously to all the jets in view of the high speed of operation of the turning mechanism achieved by the invention and the cyclical closing of the air jets 38, 45 by the raised lifters 12 as will be apparent from the sequence shown in Figure 5.

In Figure 5(a) a food stick 10 is being pushed on-edge on to a lifter 12 and immediately comes under the influence of the air jets 45, which initiate turning, as shown at (b), and the biassing air jets 38 continue to assist turning of the food stick as the counter air jets 45 have a lesser influence at (c) and become closed by the lifter at (d), until the food stick begins to move off the peak 14 of the lifter at (e), and eventually at (f) the biassing air jets 38 are closed by the lifter 12 as the food stick reaches the flat disposition supported on the top 17 of the divider block 11 and an adjacent body portion 49 of the lifter 12, which has been lifted until its peak 14 extends above the top of the divider block.

Thus, as can be seen particularly in Figure 3, the peaks 14 can form guides for food sticks 10 in the flat disposition, the pusher 18 being provided with notches 50 in its underside to pass along the peaks 14 as the pusher is operated to move the foods sticks further in the feed direction in flat disposition, e.g., on to a shelf 51 (Figure 1) or a conveyor at that level.

The last divider block 11Y (Figures 2 and 3), not being followed by another lifter 12, is provided with a facing plate 52 with an upward extension 53 (see also Figure 1) bent out to form a guide in place of the peak 14 of a lifter. However, all the divider blocks 11 and the first divider block 11X are provided with facing plates 52, with holes for the biassing air jets 38, and - as shown in Figure 6 - these plates may have upward extensions 54 first inclined upwardly away from the divider blocks to afford assistance in the turning of the food sticks 10 as they approach the flat disposition, then extending vertically to form guides for the food sticks in flat disposition.

## Claims

1. A product handling mechanism for turning food sticks (10) from an on-edge disposition to a flat disposition in which a plurality of upright divider blocks (11) are spaced apart by lifters (12), which are adapted to receive food sticks on-edge from a feed conveyor (13), the lifters (12) being provided with laterally offset longitudinally extending peaks (14) for contact with the food sticks (10) offset from the centre-planes of the food sticks, whereby upon lifting of the food sticks (10) by the lifters (12) the food sticks tend to turn in one and the same direction towards the flat disposition, and the face (15) of each divider block (11) towards which the respective food stick tends to turn has an upper portion (16) inclined away upwardly to assist in turning the food stick into the flat disposition as the peak (14) of the respective lifter (12) approaches the same level as the top (17) of the divider block (11) and characterised in that the face (37) of each divider block (11) opposite the portion (16) of the face (15) of the adjacent block that is inclined away upwardly is provided with at least one biassing air jet (38), and all the biassing air jets (38) are connected to pressure air control means (42), whereby, as lifting of the food sticks (10) commences, blasts of air from the biassing air jets (38) initiate rapid turning of the food sticks (10) by impinging on the adjacent faces (43) of the food sticks (10) adjacent their edges (44) remote from the lifters (12).

2. A mechanism as in Claim 1, characterised in that at least two biassing air jets (38) are provided within the length of each divider block (11), so that a pair of air blasts will impinge on each food stick (10) at spaced positions along its length.

3. A mechanism as in Claim 1 or Claim 2, characterised in that at least one counter air jet (45) is provided in the face (15) of each divider block (11) below the portion (16) that is inclined away upwardly, and all the counter air jets (45) are connected to pressure air control means (42), whereby, as food sticks (10) arrive on the lifters (12), blasts of air from the counter air jets (45) urge each food stick (10) over to contact the next divider block (12), for correct positioning on the peak (14) of the respective lifter (12).

4. A mechanism as in Claim 2 and Claim 3, characterised in that one pressure air control means (42) serves for both the biassing air jets (38) and the counter air jets (45).

5. A mechanism as in Claim 4, characterised in that the biassing air jets (38) and the counter air jets (45) are operated in sequence.

6. A mechanism as in Claim 4, characterised in that the biassing air jets (38) and the counter air jets (45) are supplied with pressure air continuously.

7. A mechanism as in any one of Claims 1 to 6, characterised in that each lifter (12) is adapted to be lifted until their peaks (14) extend above the tops (17) of the divider blocks (11), whereby the peaks (14) can form guides for food sticks (10) in flat disposition supported on the tops (17) of the divider blocks (11), a pusher (18) being provided with notches (50) in its underside to pass along the peaks (14) as the pusher (18) is operated to move the food sticks (10) further in the feed direction in flat disposition.

8. A mechanism as in any one of Claims 1 to 7, characterised in that the divider blocks (11) are provided with facing plates (52), with holes for the biassing air jets (38), and the facing plates (52) have upward extensions (54) first inclined away from the divider blocks (11) to afford assistance in the turning of the food sticks (10) as they approach the flat disposition, then extending vertically to form guides for food sticks (10) in flat disposition.

0 271 221

Fig.1

Fig. 2

Fig. 4

0 271 221

Fig. 3

Fig. 6

0 271 221

Fig. 5

## DOCUMENTS CONSIDERED TO BE RELEVANT

EP 87309954.3

| Category | Citation of document with indication, where appropriate, of relevant passages | Relevant to claim | CLASSIFICATION OF THE APPLICATION (Int. Cl.4) |
|---|---|---|---|
| A | FR - A - 1 549 604 (INSTITUT FÜR HOCHSEEFISCHEREI UND FISCHVERARBEITUNG) <br> * Page 4, left column * <br> -- | 1 | A 23 P 1/00 <br> A 23 L 3/36 <br> A 23 B 4/06 <br> A 22 C 25/18 |
| A | DE - A1 - 3 028 310 (GENERAL MILLS, INC.) <br> * Pages 32-44 * <br> -- | 1 | |
| A | DE - A - 1 601 080 (BRØDRENE GRAM A/S) <br> * Totality * <br> -- | 1 | |
| A | DE - A1 - 3 402 611 (S. SCHWARZ) <br> * Fig. 1-4,7; claims * <br> -- | 1 | **TECHNICAL FIELDS SEARCHED (Int. Cl.4)** |
| A | FR - A1 - 2 560 500 (STELA INOX SOCIETE ANONYME) <br> * Fig. 1; claims * <br> -- | 1 | A 23 P <br> A 23 L <br> A 23 B |
| A | GB - A - 2 054 363 (GENERAL MILLS INC.) <br> * Claims * <br> -- | 1 | A 22 C <br> B 26 D <br> B 65 G |

The present search report has been drawn up for all claims

| Place of search | Date of completion of the search | Examiner |
|---|---|---|
| VIENNA | 03-02-1988 | SLAMA |

| **DOCUMENTS CONSIDERED TO BE RELEVANT** | | | EP 87309954.3 |
|---|---|---|---|
| Category | Citation of document with indication. where appropriate, of relevant passages | Relevant to claim | CLASSIFICATION OF THE APPLICATION (Int. Cl.4) |
| A | GB - A - 2 054 360 (GENERAL MILLS INC.)<br>* Claims *<br>-- | 1 | |
| A | US - A - 4 030 898 (M. MORITA)<br>* Fig. 1; claims *<br>-- | 1 | |
| A | WO - A1 - 86/01 081 (MITSUI & CO., LTD.)<br>* Fig.; abstract *<br>----- | 1 | |
| | | | **TECHNICAL FIELDS SEARCHED (Int. Cl.4)** |

The present search report has been drawn up for all claims

| Place of search | Date of completion of the search | Examiner |
|---|---|---|
| VIENNA | 03-02-1988 | SLAMA |